Europäisches Patentamt

European Patent Office

Office européen des brevets

(19)

(11) Numéro de publication: **0 069 687**

**A1**

# (12) DEMANDE DE BREVET EUROPEEN

(21) Numéro de dépôt: 82420089.3

(22) Date de dépôt: 02.07.82

(51) Int. Cl.³: **B 62 M 9/12**

(30) Priorité: 03.07.81 FR 8113459

(43) Date de publication de la demande:
12.01.83 Bulletin 83/2

(84) Etats contractants désignés:
AT BE CH DE GB IT LI LU NL SE

(71) Demandeur: Etablissements LE SIMPLEX (société à responsabilité limitée)
3 et 5 rue de la Breuchillière Zône Industrielle Dijon St-Apollinaire
F-21019 Dijon Cedex(FR)

(72) Inventeur: Juy, Henri
43 rue Chabot Charny
F-21000 Dijon(FR)

(74) Mandataire: Buttet, Roger et al,
"Cabinet Charras" 3, Place de l'Hôtel-de-Ville
F-42000 Saint-Etienne(FR)

(54) Dispositif de commande assurant des positions multiples préétablies et contrôlées, applicable en particulier aux changements de vitesse pour les cycles et véhicules similaires.

(57) Le dispositif est remarquable en ce qu'il comprend deux cliquets (23) inversement superposés dans un porte-cliquets (22) actionné transversalement sous l'action d'une biellette (18) qui est reliée par un axe (14) et un levier de transmission (15) avec la manette de commande, cela, par un lien filiforme; les cliquets agissant alternativement sur une crémaillère (27) solidaire du guide-chaîne (30).

L'invention s'applique essentiellement aux changements de vitesse de bicyclettes et véhicules similaires.

FIG. 7

EP 0 069 687 A1

- 1 -

<u>Dispositif de commande assurant des positions multiples préétablies et contrôlées, applicable en particulier aux changements de vitesse pour les cycles et véhicules similaires.</u>

L'invention concerne un dispositif de commande assurant des positions multiples préétablies et contrôlées, applicable en particulier aux changements de vitesse pour les cycles et véhicules similaires.

L'invention se rattache au secteur technique des mécanismes et moyens de commande, notamment ceux visant à donner à l'organe ou aux organes commandés, des positions multiples préétablies et contrôlées ; l'objet de l'invention se rattache aussi aux changements de vitesse et plus particulièrement aux changements de vitesse pour les bicyclettes et véhicules similaires qui sont une application particulièrement visée quoique non limitative, de l'objet de l'invention.

On connaît des dispositifs qui visent des résultats analogues, par exemple, le dispositif sélecteur qui a fait l'objet de la Demande de Brevet français numéro national d'enregistrement 79.00710 et de son Premier Certificat d'Addition numéro national d'enregistrement 79.31536. Cependant, ces dispositifs ne peuvent pas être considérés comme un aboutissement satisfaisant si l'on considère les nombreuses exigences actuelles et les critères d'application dans le domaine des changements de vitesse pour les bicyclettes qui fonctionnent fréquemment dans des conditions difficiles.

La présente invention a pour but de remédier à ces inconvénients.

Le dispositif de commande selon la présente invention telle qu'elle est caractérisée dans les revendications, a été conçu essentiellement pour parvenir à une fabrication aussi simple que possible, en vue de réduire sensiblement le coût de fabrication, tout en assurant un fonctionnement sûr et en parvenant aussi à un degré élevé de fiabilité autorisant une exploitation industrielle au niveau de production et de qualité nécessaires.

Suivant une première caractéristique, ce dispositif de commande qui comprend des moyens de commande manuelle (ou autre éventuellement) déplacés angulairement toujours avec la même amplitude dans un sens ou dans l'autre, à partir d'une position neutre jusqu'à une position limite, un ou des moyens de transmission de commande pour relier les moyens de manoeuvre à un mécanisme à biellette ou équivalent pivotée angulairement dans un sens ou dans l'autre, ladite biellette déplaçant alternativement des cliquets ou organes similaires qui coopèrent avec un organe du type crémaillère portant des trous ou encoches, ou autres points d'entraînement en nombre correspondant au nombre de positions préétablies à assurer, espacés d'une valeur correspondant à l'écartement entre chacun des pignons de la roue libre, ladite crémaillère étant montée parallèlement à l'axe portant l'organe à positionner dont la crémaillère est solidaire, l'organe à positionner étant le guide-chaîne dans l'application aux changements de vitesse pour cycles, est caractérisé en ce qu'un axe est déplacé angulairement par l'intermédiaire du moyen de transmission entraîné par les moyens de la commande manuelle, le dit axe étant solidaire de la biellette dont un prolongement reçoit la poussée d'un moyen élastique mis en tension selon le sens de pivotement et qui tend toujours à ramener ladite biellette en position médiane correspondant à la position neutre des moyens de commande manuelle ou autre, ladite biellette coopérant avec un système de deux cliquets au moins partiellement superposés, destinés à se trouver engagés successivement avec les trous ou encoches de l'organe crémaillère, les ouvertures ou encoches extrêmes de ladite crémaillère étant en partie obturées à des niveaux différents pour les deux encoches extrêmes de façon que le cliquet correspondant ne puisse entraîner la crémaillère au-delà des positions limites préétablies que doit prendre l'organe tel que le guide-chaîne à positionner.

Suivant une autre caractéristique, le mécanisme d'entraînement de la crémaillère et de l'organe à positionner tel que guide-chaîne, comprend deux cliquets superposés dont le bec d'entraînement unidirectionnel et la rampe d'échappement sont inversement disposés pour chaque cliquet, lesdits cliquets étant montés coulissant sous la poussée de ressorts pour être engagés ensemble dans une des ouvertures ou fenêtres de la crémaillère ; les cliquets et ressorts, et aussi de préférence une lame intercalaire entre les cliquets, étant montés dans un porte-cliquets guidé à coulissement parallèlement à la crémaillère, dans une ou des glissières du boîtier du dispositif, un masque étant monté fixe dans le boîtier entre la crémaillère et les cliquets, l'ouverture en escalier de ce masque autorisant l'action d'entraînement de l'un ou l'autre cliquet dans les ouvertures ou fenêtres de la crémaillère ; le porte-cliquets présentant directement ou d'une manière rapportée sous forme de plaquette, une chape ou analogue destinée à coopérer avec l'extrémité de la biellette solidaire de l'axe qui est entraîné par le moyen de transmission et la commande manuelle.

Les avantages obtenus grâce à cette invention consistent essentiellement en :
- la simplification du dispositif par rapport aux réalisations connues visant des résultats similaires. Cette simplification est réalisée aussi bien dans le domaine du poids, de l'encombrement, du nombre de pièces composant le dispositif, du montage et du fonctionnement. De tout cela il découle un prix de revient économique, une plus grande fiabilité et une qualité de fabrication importante ;
- la rapidité des manoeuvres de passage des vitesses, obtenue par une simple impulsion ou amplitude complète sur la manette, provoquant le déplacement précis de la crémaillère par les cliquets associés aux fenêtres de ladite crémaillère avec verrouillage de sécurité des vitesses et rappel en position neutre des cliquets et de la manette de commande ;
- la bonne étanchéité aux impuretés du dispositif par le logement des mécanismes de la manette et du changement de vitesse dans des boîtiers fermés par des carters de protection ;
- la visualisation nette des vitesses engagées par le repérage sur la manette de commande au guidon ou sur la potence.

L'invention est exposée ci-après plus en détail, à l'aide des dessins illustrant le dispositif dans une application particulière aux changements de vitesse arrière des cycles.

La figure 1 est une vue en perspective illustrant une première réalisation : le changement de vitesse selon l'invention est monté sur la roue arrière d'un cycle et sa manette de commande est fixée sur le guidon ou cintre.

La figure 2 est une vue illustrant en perspective et de manière séparée, les principaux éléments du changement de vitesse.

La figure 3 est une vue en plan avec carter enlevé, du changement de vitesse représenté en position neutre de la biellette de commande des cliquets, c'est-à-dire au repos.

La figure 4 est une vue semblable à la figure 3, illustrant le changement de vitesse avec la biellette en action dans un sens, c'est-à-dire en cours de passage d'une vitesse.

La figure 5 est une vue en coupe considérée suivant la ligne brisée 5-5 de la figure 3, illustrant principalement la liaison réglable du boîtier avec le support de fixation à la roue arrière.

La figure 6 est une vue en coupe considérée suivant la ligne brisée 6-6 de la figure 4, illustrant principalement la liaison réglable du boîtier avec le support de fixation à la roue arrière, et l'assemblage du boîtier et du carter.

La figure 7 est une vue à plus grande échelle et en coupe considérée suivant la ligne 7-7 de la figure 3, montrant notamment le montage de l'axe porte-biellette, des cliquets superposés, de la crémaillère et la liaison avec le guide-chaîne.

Les figures 8 et 9 sont des vues partielles en coupe considérées respectivement suivant les lignes 8-8 et 9-9 de la figure 7, illustrant l'engagement des cliquets dans la crémaillère.

Les figures 10 à 18 sont des vues en coupe considérées suivant la ligne 10-10 de la figure 7, illustrant les différentes positions de la crémaillère, obtenues par actionnement dans un sens de la biellette entraînant le porte - cliquets.

La figure 19 est une vue illustrant en perspective et de manière séparée, les principaux éléments de la manette de commance suivant une première réalisation.

La figure 20 est une vue de face montrant la manette de commande selon la figure 19, fixée sur le guidon ou cintre d'une bicyclette.

Les figures 21 et 22 sont des vues en plan avec carter et tambour enlevés, illustrant respectivement la manette avec son porte-cliquets d'entraînement au repos et en action.

La figure 23 est une vue à plus grande échelle et en coupe considérée suivant la ligne 23-23 de la figure 22, illustrant un cliquet en action dans la denture d'un tambour à entraîner.

Les figures 24 et 25 sont des vues en coupe considérées respectivement suivant les lignes 24-24 et 25-25 de la figure 21, montrant le montage des divers éléments de la manette selon les figures 19 à 23.

La figure 26 est une vue en plan avec carter enlevé, illustrant une deuxième forme de réalisation du changement de vitesse suivant l'invention représenté avec la biellette de commande des cliquets en position neutre, c'est-à-dire au repos.

La figure 27 est une vue semblable à la figure 26, illustrant la biellette en action dans le sens suivant lequel le guide-chaîne est entraîné en direction d'un plus grand pignon de la roue libre.

La figure 28 est une vue semblable à la figure 26, illustrant la biellette en action dans le sens suivant lequel le guide-chaîne est entraîné en direction d'un plus petit pignon de la roue libre.

La figure 29 est une vue en coupe considérée suivant la ligne 29-29 de la figure 26, montrant le montage des divers éléments du changement de vitesse.

La figure 30 est une vue en coupe considérée suivant la ligne 30-30 de la figure 29, montrant notamment le verrouillage de chaque position de la crémaillère.

La figure 31 est une vue en coupe considérée suivant la ligne 31-31 de la figure 26, montrant notamment le montage des cliquets sur la biellette de commande.

La figure 32 est une vue de face illustrant une autre forme de réalisation de la manette de commande fixée sur la potence d'un cycle et dont on a enlevé le carter pour mieux voir le mécanisme. On a représenté en traits interrompus les positions limites d'amplitude et en traits continus, la position neutre de la manette.

La figure 33 est une vue semblable à la figure 32, montrant la manette avec carter enlevé et en position limite d'amplitude dans un sens.

La figure 34 est une vue en coupe considérée suivant la ligne 34-34 de la figure 32, illustrant le montage des divers éléments constituant la manette.

La figure 35 est une vue en plan illustrant la manette selon les figures 32 à 34, fixée par collier sur la potence d'une bicyclette.

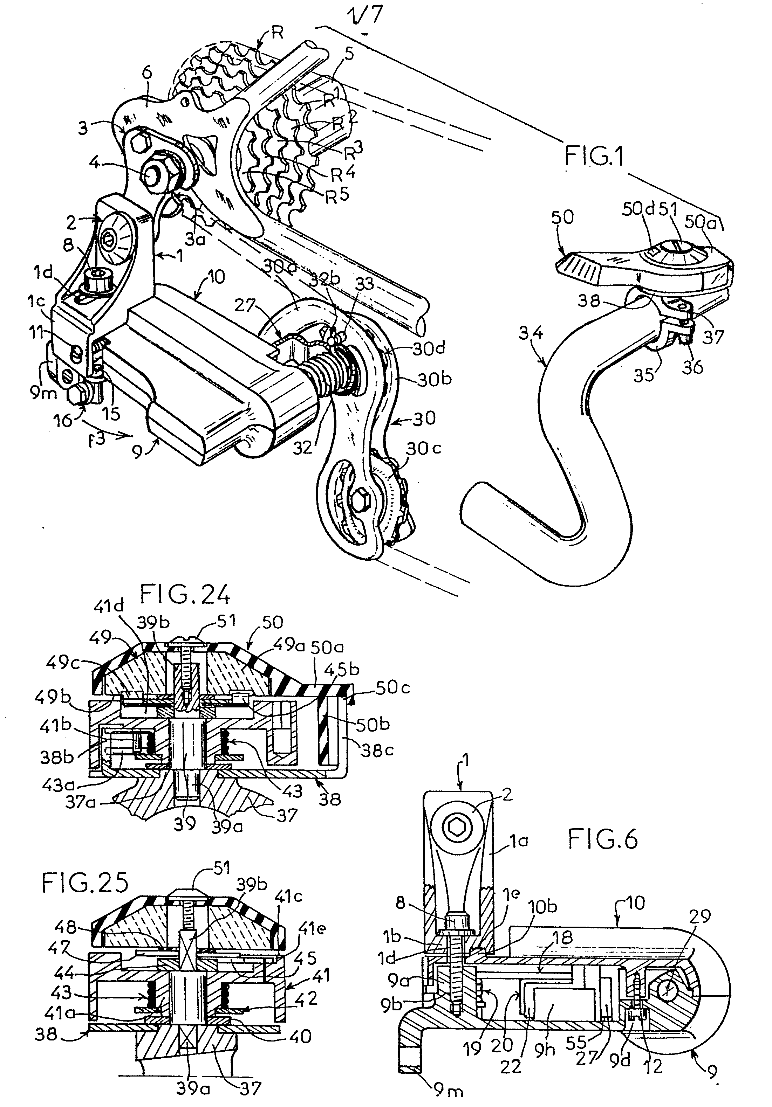

Suivant les deux formes de réalisation illustrées aux figures 1 à 18 et 26 à 31 des dessins, le changement de vitesse arrière selon l'invention comprend un support 1 en alliage léger de préférence, présentant trois parties principales perpendiculaires entre elles, à savoir : une branche supérieure 1a, une partie transversale 1b et une branche inférieure 1c. La branche supérieure 1a est reliée à articulation libre par un axe-vis 2, à une patte-support 3 bien connue pour la fixation du changement de vitesse sur l'axe 4 du moyeu 5 de la roue arrière contre la patte de cadre 6, cela par la fente 3a de la patte-support (figures 1, 2 et 5).

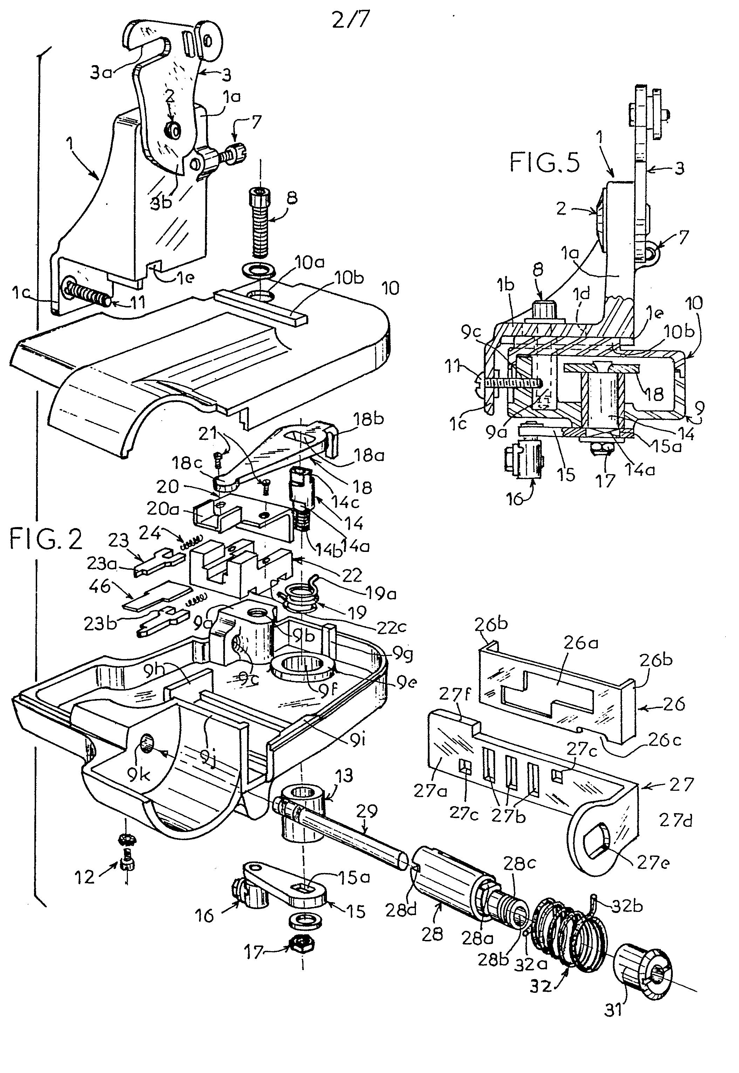

Comme on le voit également aux figures 2 et 5, une butée réglable 7 est disposée sur la face arrière de la branche supérieure 1a, en face d'un décrochement 3b de la patte-support, afin de limiter vers l'avant du cycle la position du changement de vitesse, et en particulier du guide-chaîne, cela, en fonction des diamètres des pignons de la roue libre R, de façon que le guide-chaîne soit positionné au plus près des pignons.

La partie transversale 1b du support présente une lumière ou ouverture oblongue 1d qui est traversée par une vis 8 destinée à fixer le support sur le boîtier 9 du changement de vitesse qui présente à cet effet un bossage 9a avec trou taraudé 9b, cela après avoir traversé un trou 10a formé sur un carter 10 de forme complémentaire au boîtier (figures 1, 2 et 6).

Le support 1 est d'autre part fixé sur le boîtier de manière réglable transversalement, afin que le guide-chaîne relié au boîtier soit aligné avec le plus petit pignon de la roue libre lorsque le changement de vitesse a son guide-chaîne positionné sur la première vitesse. Pour cela on a prévu un guidage transversal du support 1 par l'intermédiaire d'une rainure 1e exécutée sous la partie transversale 1b et coopérant avec une glissière 10b formée sur le carter 10. Le réglage transversal du support 1 s'opère alors par une vis 11 montée à rotation libre mais arrêtée en translation, dans la branche inférieure 1c du support et coopérant avec un taraudage 9c formé dans le bossage 9a du boîtier (figures 2 et 5).

On comprend qu'en débloquant la vis de fixation 8, on peut faire coulisser le support 1 par rapport au boîtier 9 et au carter 10, en agissant sur la vis 11.

On note que le carter 10 est appliqué sur le boîtier par emboîtement suivant leur bordure périphérique étagée, puis reliés entre eux par la vis 8 de fixation du support 1 et par une vis 12 traversant un orifice 9d du boîtier et coopérant avec un bossage fileté 10c du carter, cela près de l'axe-support du guide-chaîne (figure 6). Les mécanismes du changement de vitesse sont ainsi protégés efficacement des impuretés et projections extérieures.

Le boîtier 9 présente à proximité du bossage 9a, un palier 9e dont l'alésage 9f reçoit à emmanchement serré, un manchon 13 pour le guidage à rotation libre, d'un axe 14 qui constitue l'organe de liaison entre un moyen de transmission (levier) et un organe de commande (biellette) du guide-chaîne. A cet effet, l'axe 14 présente à la partie inférieure, des méplats 14a ou moyen équivalent d'indexation angulaire, coopérant avec l'ouverture de forme complémentaire 15a d'un levier 15 dont l'autre extrémité porte un dispositif 16 de serrage du lien semi-rigide ou souple (non représenté), reliant le changement de vitesse à son moyen de commande manuelle (que l'on étudiera par la suite). Une portée filetée 14b de l'axe et un écrou 17 assurent la fixation de l'axe 14 avec le levier 15 de transmission (figures 2, 5 et 7).

A la partie supérieure, l'axe 14 présente encore des méplats 14c ou équivalent, pour l'indexation angulaire de l'organe de commande du guide-chaîne qui est une biellette 18 comportant à cet effet, une ouverture 18a de forme complémentaire aux méplats 14c et qui est retenue de manière fixe ou démontable, sur l'axe 14, par tous moyens tels que vissage, rivetage...

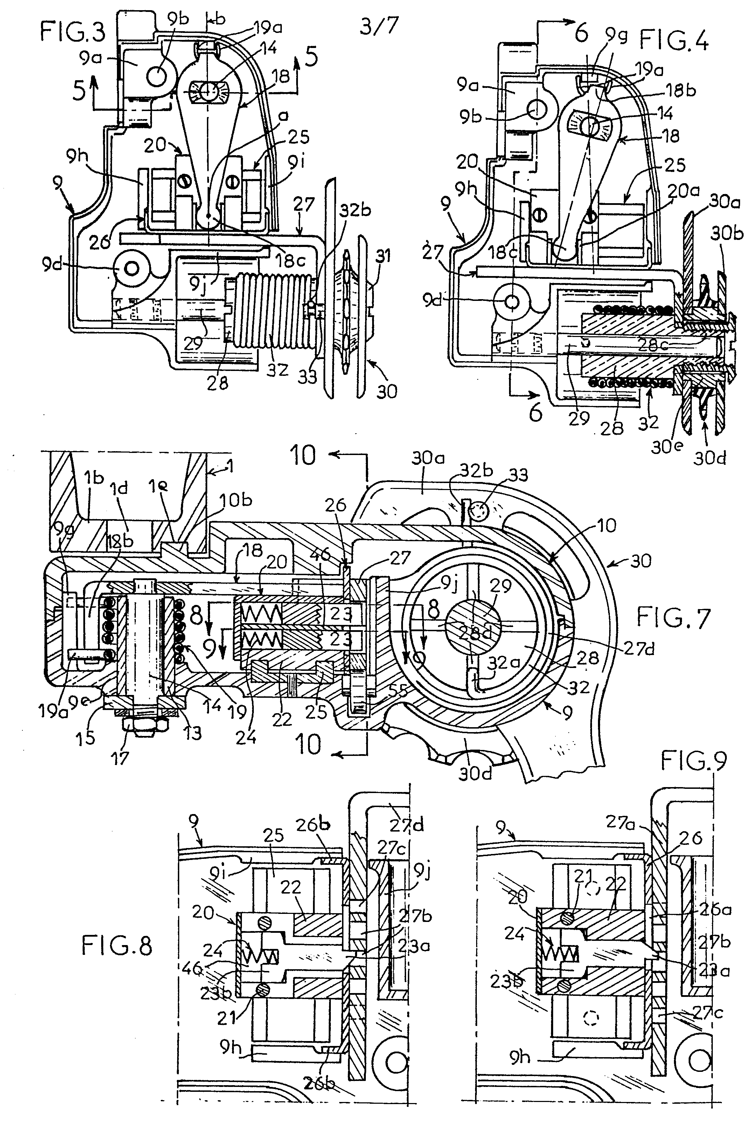

L'extrémité de la biellette 18, la plus proche de l'ouverture 18a, est recourbée vers le bas sous forme de languette 18b pour longer une saillie intérieure 9g du boîtier, lorsque la biellette est au repos, c'est-à-dire lorsqu'elle est parallèle à l'axe longitudinal du boîtier (figure 3). Dans cette position, les extrémités 19a d'un ressort à boudins 19 monté concentriquement autour du manchon 13, entre la biellette 18 et le palier 9e, s'appuient en tension de part et d'autre de la saillie 9g et la languette 18b passe entre les extrémités du ressort (figures 3 et 7).

L'extrémité opposée de la biellette 18 est amincie et forme une genouillère 18c ou tête circulaire qui est engagée dans une chape 20a formée à l'extrémité d'une tôle équerrée 20 fixée latéralement en 21 sur les montants latéraux 22a d'un porte-cliquets 22.

Le porte-cliquets 22 présente axialement une entaille étagée 22b dans laquelle peuvent coulisser deux cliquets superposés 23 qui sont disposés de manière à présenter leur partie active profilée 23a inversement l'une par rapport à l'autre (figures 2, 8 et 9). Une tôle mince 46 est interposée entre les deux cliquets afin de faciliter leur glissement. La partie arrière/élargie/23b de chaque cliquet est entaillée pour recevoir un ressort à boudin 24 en appui contre la tôle équerrée 20, afin de pousser constamment les cliquets vers l'avant.

Le porte-cliquets 22 présente encore sur sa face inférieure, des rainures transversales 22c destinées à coopérer à coulissement avec des glissières 25a formées directement dans le boîtier ou rapportées (comme illustré aux figures 2, 3, 4, 7, 8 et 9).

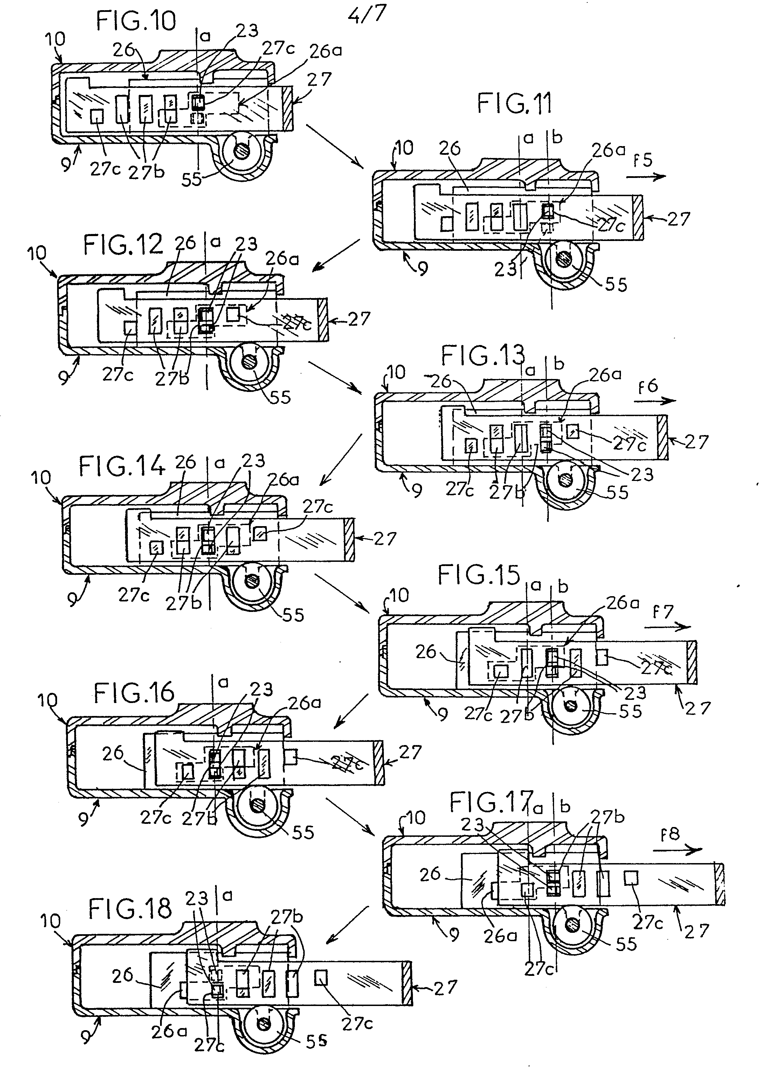

Devant le porte-cliquets, du côté où les extrémités actives des cliquets 23 sont en saillie, est disposée, parallèlement aux glissières 25, une tôle 26 appelée par la suite "masque" en ce sens qu'elle peut retenir les cliquets 23 lorsqu'ils sont en contact avec sa surface pleine, ou les laisser passer lorsqu'ils sont alignés avec une ouverture étagée 26a du masque, sur laquelle on reviendra plus loin. Les extrémités latérales repliées 26b du masque s'appliquent contre des parois 9h, 9i du boîtier, en vue de son positionnement transversal (figures 8 et 9), tandis que sa hauteur est calculée de telle sorte qu'il ne puisse se déplacer dans ce sens, lorsque le carter 10 est assemblé au boîtier 9, comme on le voit à la figure 7.

Dans le sens longitudinal, le masque 26 est retenu avec jeu par l'engagement transversal entre lui et une paroi 9j du boîtier, d'une pièce équerrée 27 dont la branche 27a engagée dans le boîtier, constitue une crémaillère, en ce sens qu'elle présente des ouvertures ou fenêtres intermédiaires 27b et extrêmes 27c, destinées à s'engager alternativement avec les cliquets 23, comme on le verra par la suite. La branche 27a entraînée par les cliquets 23, repose sur un galet 55 logé dans le boîtier, afin de faciliter le glissement (figure 7). Le masque 26 est découpé en 26c pour le passage sur le galet 55.

L'autre branche 27d de la crémaillère 27 présente en son centre, une ouverture à méplats 27e ou moyens similaires d'indexation angulaire et de fixation sur une portée de forme complémentaire 28a exécutée sur un coussinet 28. Le coussinet 28 est monté à coulissement par son alésage axial 28b, sur un axe lisse 29 qui est solidaire de manière fixe ou démontable, du boîtier 9 comprenant à cet effet, un logement 9k qui est réalisé dans un bossage dudit boîtier, de manière parallèle à la branche 27a de la crémaillère.

Comme on le voit mieux à la figure 4, le guide-chaîne 30 est constitué par un flasque intérieur 30a et un flasque extérieur 30b. A l'extrémité inférieure, les flasques portent à rotation libre, un galet 30c, tandis que l'autre galet 30d est monté à rotation libre, sur une entretoise 30e dont les épaulements extrêmes sont solidaires des flasques, afin que l'entretoise tourillonne avec eux. Cet ensemble entretoise-flasques peut tourner librement et avec un léger jeu, dans le sens transversal, par rapport à un écrou épaulé 31 vissé sur l'extrémité filetée 28c du coussinet 28 pour s'appuyer contre la branche 27d de la crémaillère et ainsi la bloquer contre le coussinet ; l'écrou 31 étant creux pour laisser passer l'axe 29.

Bien entendu, le guide-chaîne 30 doit aussi, de façon connue, tendre la chaîne qui y est enroulée. Pour cela, un ressort à boudin 32 est monté concentriquement au coussinet 28 avec une extrémité 32a engagée dans une des fentes 28d réalisées sur la face arrière du coussinet, tandis que l'autre extrémité 32b du ressort s'appuie en tension contre un pion 33 solidaire du flasque intérieur 30a du guide-chaîne (figure 7).

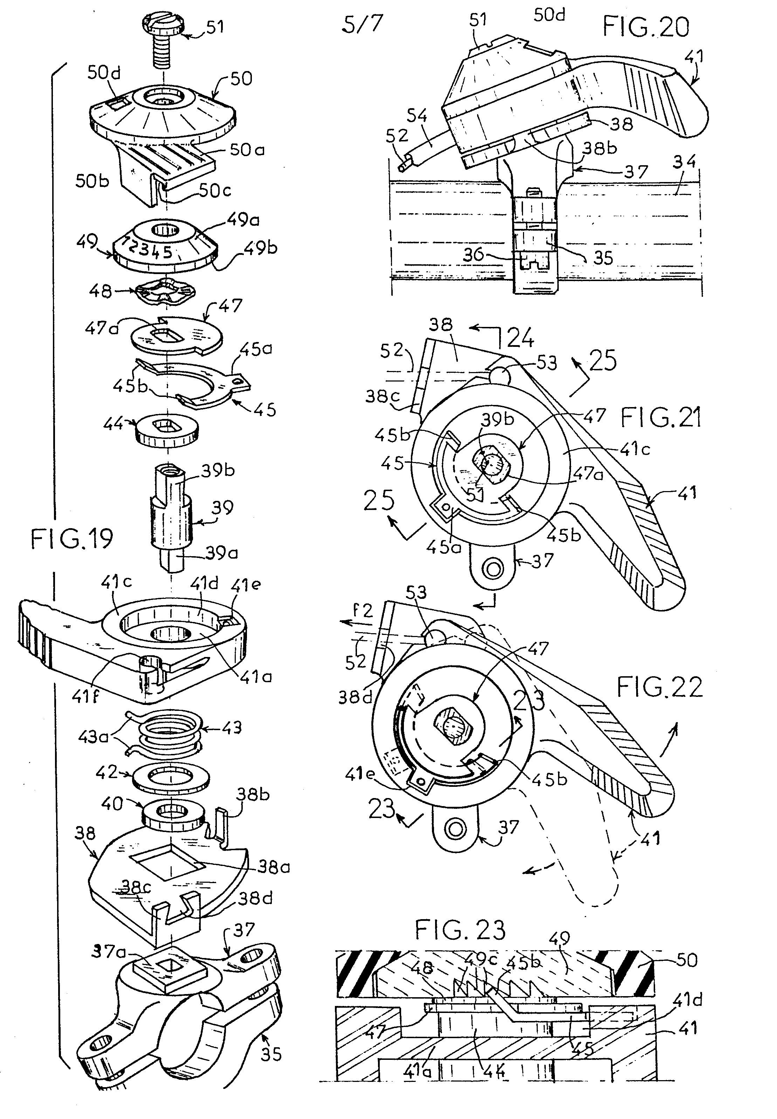

En se référant plus particulièrement aux figures 19 à 25, on décrit maintenant une première forme de réalisation de l'organe de commande manuelle destiné à déplacer le guide-chaîne 30.

On voit à la figure 1 que l'organe de commande manuelle est conçu pour être fixé sur le guidon ou cintre 34 de la bicyclette, de préférence entre la potence et la partie recourbée ou cintrée, c'est-à-dire à proximité de la main de l'utilisateur tenant le guidon soit par ses extrémités lorsqu'il s'agit d'un guidon plat, soit "en haut du guidon" lorsqu'il s'agit d'un guidon course.

A cet effet, l'organe de commande comprend un demi-collier 35 assemblé par vis 36 autour du guidon, avec un autre demi-collier 37 constituant le support de manette et qui est incliné transversalement (figure 20) pour orienter vers le bas en direction du tube incliné du cadre, le lien filiforme de commande. A la partie supérieure, le support 37 présente une portée polygonale 37a pour le montage et l'indexation angulaire d'un secteur en tôle 38 présentant à cet effet une ouverture centrale de forme complémentaire 38a.

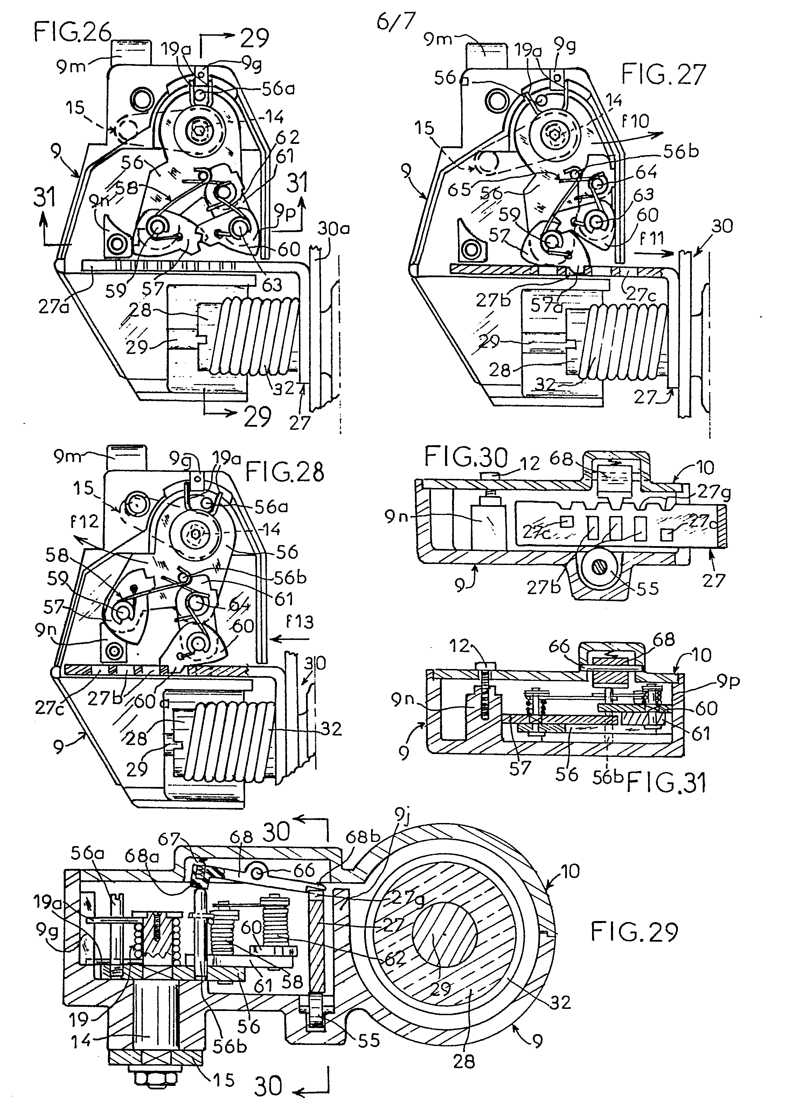

La portée 37a présente encore une ouverture axiale 37b avec méplats ou moyens similaires d'indexation pour la portée correspondante 39a d'un axe-pivot 39 emmanché de force dans cette ouverture.(figures 24, 25). Une rondelle 40 engagée sur l'axe-pivot, est ensuite plaquée au-dessus du secteur 38 et la manette ou levier de commande 41 est engagée au-dessus de la rondelle par son moyeu 41a dont l'extrémité épaulée reçoit par sertissage, une rondelle 42 de retenue pour un ressort à boudin 43 qui est ainsi retenu autour du moyeu (figures 24 et 25).

Le ressort à boudin. 43, comme le ressort de rappel 19 de la biellette 18, présente des extrémités ou branches recourbées 43a destinées à s'appuyer en tension de part et d'autre d'une saillie intérieure 41b de la manette (figure 24), et une languette recourbée 38b du secteur 38 s'engage au montage entre les branches 43a du ressort. Cette languette 38b sert également de butée de limitation du déplacement angulaire dans les deux sens de la manette.

La face supérieure 41c de la manette présente un chambrage 41d dans lequel est engagée une rondelle d'épaisseur 44 indexée en rotation sur une portée à méplats 39b de l'axe - pivot 39. Un cliquet 45 en tôle mince, est positionné par une patte latérale 45a, dans une entaille 41e de la face supérieure de la manette (figures 21, 22 et 25). Ce cliquet a une forme générale en demi-couronne dont les extrémités sont recourbées vers le haut pour constituer les parties actives (45b).

Une tôle mince 47 constituée de deux demi-cercles de diamètres différents, est engagée par son ouverture à méplats 47a, sur la portée 39b de l'axe-pivot, au-dessus du cliquet 45, pour former un masque à l'égard des parties actives 45b, comme on le verra plus loin.

A la suite du masque 47, une rondelle élastique 48 est montée autour de la portée 39b et un tambour 49 coiffe l'ensemble à l'extrémité supérieure de l'axe-pivot ; le tambour étant lui-même recouvert par un carter de protection 50 qui épouse le contour du tambour et présente un prolongement 50a avec rabat 50b et entaille de positionnement 50c, pour être assujetti sur une partie relevée 38c du secteur (figure 24); l'ensemble carter-tambour est fixé sur le secteur, par une vis axiale 51 vissée dans l'axe-pivot 39.

Le tambour 49 est de préférence réalisé en matériau plastique, il comprend : une partie supérieure tronconique 49a et une face inférieure 49b présentant en deux points diamétralement opposés, deux secteurs comportant des dents 49c du type "dents de loup", c'est-à-dire comprenant une face perpendiculaire à la face inférieure pour l'entraînement par le cliquet, et une face inclinée pour l'échappement du cliquet (figure 23).

La partie tronconique 49a présente encore de toute manière connue (collage, gravure...), des chiffres 1, 2, 3, 4, 5..., correspondant au nombre de vitesses à passer, et le carter 50 présente une fenêtre 50d en regard de ces chiffres.

Le lien filiforme de commande entre la manette 41 et le levier 15, est une tige métallique semi-rigide 52, genre "corde à piano", présentant à une extrémité une goupille 53 logée dans un chambrage 41f de la manette situé à proximité de la partie relevée 38c du secteur qu'elle traverse par une large ouverture 38d. Une gaine 54, de type connu en soi, mais obligatoirement incompressible et inextensible, est disposée et retenue entre la partie relevée 38c du secteur et la butée de gaine 9m formée sous le boîtier 9, près du dispositif de serrage 16 de la tige 52.

On décrit maintenant le fonctionnement du changement de vitesse et de son moyen de commande, selon la première réalisation illustrée aux figures 1 à 25 des dessins, dans lesquelles on suppose que le dispositif de changement de vitesse est conçu pour sélectionner cinq vitesses à la roue libre R.

Les déplacements de la crémaillère 27 portant le guide-chaîne 30 sont plus particulièrement illustrés aux figures 10 à 18 qui sont des vues en coupe transversale selon la ligne 10-10 de la figure 7, c'est-à-dire considérées entre la paroi 9j

du boîtier et la crémaillère 27.

On voit à la figure 10 que la crémaillère 27 est engagée au maximum dans le boîtier 9. Cette position correspond à l'alignement du guide-chaîne 30 avec le plus petit pignon R5 de la roue libre R (position préalablement réglée par le déplacement de l'ensemble boîtier 9 - carter 10 sur le support 1, à l'aide de la vis 11).

Dans cette position, la biellette 18 de commande du porte-cliquets 22 est au repos, c'est-à-dire dans la position représentée à la figure 3, avec son extrémité 18c formant genouillère, située dans l'axe longitudinal b du boîtier,et sa languette arrière 18b alignée avec la saillie intérieure 9g du boîtier, entre les deux branches 19a du ressort de rappel 19.

Parallèlement, la manette 41 de commande au guidon est également au repos, comme illustré à la figure 21, avec les parties actives 45b du cliquet en prise avec les dents 49c du tambour (figure 23), le masque 47 laissant passer de chaque côté, les parties actives 45b du cliquet, et le chiffre 5 est affiché dans la fenêtre 50d du carter.

Si l'on veut placer le guide-chaîne 30 sur le deuxième pignon R4 de la roue libre, on agit sur la manette 41, dans le sens de la flèche f1, figure 22. Dans cette action, la partie active 45b du cliquet 45, située dans le sens de déplacement et en prise avec une dent, entraîne le tambour 49 dans le même sens, tandis que l'autre partie active 45b passe sous le masque 47 par élasticité (traits continus, figure 22). Toujours dans cette action sur la manette 41, la saillie intérieure 41b en se déplaçant angulairement, entraîne une extrémité 43a du ressort de rappel 43 qui est mis en tension, de telle sorte que lorsqu'on relâche la manette 41 après avoir accompli une amplitude complète, le ressort 43 assure le retour en position neutre de la manette, sans entraînement du tambour,du fait de l'échappement du cliquet sur la face inclinée de la dent considérée.

L'action exercée sur la manette 41 provoque la poussée (flèche f2, figure 22) de la tige semi-rigide 52 qui transmet son mouvement au levier 15 portant l'organe 16 de serrage de la tige. Ledit levier pivote selon flèche f3, figure 1, en entraînant ainsi la biellette 18 dans le sens de la flèche f4, figure 4, à l'encontre d'une extrémité 19a du ressort de rappel 19 qui est écartée par la languette 18b de la biellette (traits interrompus, figure 4).

Dans cette action, la biellette 18 entraîne le porte-cliquets 22 qui coulisse sur les glissières 25 du boîtier.

Comme on le voit aux figures 10 et 11, au départ de cette action (figure 10), le cliquet supérieur 23 poussé par son ressort 24, traverse l'ouverture étagée 26a du masque fixe 26 et pénètre (par sa partie active ou bec d'entraînement unidirectionnel 23a) dans la fenêtre extrême supérieure 27c limitée en dimension pour l'engagement du cliquet supérieur seulement, tandis que le cliquet inférieur inversé, passe à travers l'ouverture 26a du masque et bute contre la crémaillère 27 en dessous de la fenêtre 27c.

Lorsque la biellette 18, matérialisée dans ces figures de principe, par l'axe a correspondant à l'axe de la genouillère 18c, pivote selon flèche f4, le cliquet supérieur entraîne la crémaillère 27 dans le sens de la flèche f5, figure 11, donc le guide-chaîne 30, en assurant ainsi le passage de la chaîne sur le pignon R4.

Comme on l'a dit plus haut, lorsque l'on relâche la manette 41, celle-ci est rappelée en position neutre par le ressort 43 ; le chiffre 4 étant affiché dans la fenêtre 50d du carter. La tige de commande 52 reliée à la manette, tire le levier de transmission 15, aidée en cela par le ressort 19 de la biellette qui revient en position neutre en ramenant le porte-cliquets 22 dont le cliquet supérieur échappe de la fenêtre extrême supérieure 27c, tandis que le cliquet inférieur glisse contre le masque 26 en dessous de l'ouverture étagée 26a.

La figure 12 montre la position repos ou neutre de la biellette (axes a et b confondus), le guide-chaîne étant aligné avec le pignon R4 de la roue libre et les cliquets supérieur et inférieur étant engagés dans la première fenêtre intermédiaire 27b dont la hauteur est le double de celle des fenêtres extrêmes afin de donner le passage aux deux cliquets pour l'entraînement de la crémaillère dans les deux sens.

Pour faire passer le guide-chaîne 30 sur le troisième pignon R3 de la roue libre, on agit de la même façon que précédemment, sur la manette 41 pour effectuer une amplitude complète. Comme on le voit à la figure 13, le pivotement de la biellette 18 matérialisée par l'axe a, assure l'entraînement de la crémaillère selon flèche f6, par le bec d'entraînement unidirectionnel 23a du cliquet supérieur 23 traversant l'ouverture du masque, tandis que le cliquet inférieur glisse contre la partie pleine du masque sous l'ouverture. La manette 41 étant relâchée, la biellette 18 revient en position neutre, le cliquet supérieur échappe de la première fenêtre 27b, tandis que le cliquet inférieur glisse contre le masque 26.

Les deux cliquets sont alors engagés élastiquement dans la deuxième fenêtre intermédiaire 27b de la crémaillère (figure 14).

Le passage du guide-chaîne 30 sur le quatrième pignon R2 de la roue libre, s'opère de la même manière que précédemment, par entraînement de la crémaillère 27 selon flèche f7, figure 15, à l'aide du cliquet supérieur traversant l'ouverture du masque 26, tandis que le cliquet inférieur glisse contre le masque sous l'ouverture 26a.

Au retour en position neutre, figure 16, les deux cliquets sont engagés dans la troisième fenêtre intermédiaire 27b et l'on peut de nouveau entraîner la crémaillère 27 par le cliquet supérieur, flèche f8, figure 17, afin de placer le guide-chaîne 30 sur le cinquième pignon R1 de la roue libre.

Lorsque les cliquets 23 reviennent en position neutre, figure 18, le cliquet supérieur passant à travers l'ouverture 26a du masque, bute contre la crémaillère 27, du fait qu'il qu'il n'y a plus de fenêtre intermédiaire à cet endroit, mais seulement une fenêtre extrême inférieure 27c, de même dimension que son homologue opposée, tandis que le cliquet inférieur s'engage dans ladite fenêtre inférieure 27c en vue d'entraîner la crémaillère en sens inverse lorsqu'on veut revenir sur les pignons de plus petits diamètres, cela par une amplitude de sens contraire, flèche f9, figure 22.

A noter que la crémaillère 27 présente sur son chant supérieur, un épaulement 27f à l'extrémité de la branche 27a, qui vient s'appuyer contre une butée 10d formée dans le carter 10 afin d'empêcher la crémaillère de s'échapper du boîtier (figure 18).

On voit également que les positions extrêmes de la crémaillère (figures 10 et 18) correspondant aux vitesses extrêmes, sont verrouillées uniquement dans le sens d'entraînement considéré, par le fait que les fenêtres 27c sont établies sur une demi-hauteur en empêchant ainsi d'agir soit le cliquet supérieur, soit le cliquet inférieur. Cette particularité de demi-hauteur des fenêtres extrêmes évite toute détérioration du mécanisme, en particulier du changement de vitesse, dans le cas où l'usager continuerait d'agir accidentellement sur la manette.

On souligne également de façon toute particulière, que dans les positions intermédiaires correspondant aux vitesses données par les pignons R2, R3, R4, les deux cliquets sont engagés dans les fenêtres intermédiaires 27b et le verrouillage de la crémaillère est assuré dans les deux sens.

Au sujet de la manette 41, il faut noter que le nombre de dents de loup prévu sur la face inférieure du tambour 49 sera égal au nombre de vitesses moins un, soit quatre dents pour l'exemple de cinq vitesses considéré ici. Cette disposition évite qu'après un cycle complet de fonctionnement dans un sens ou dans l'autre, une impulsion superflue à la manette ne provoque l'entraînement du tambour, ce qui effacerait le chiffre de la vitesse extrême indiqué dans la fenêtre 50d.

Suivant une deuxième forme de réalisation illustrée aux figures 26 à 31 des dessins, le changement de vitesse présente les mêmes dispositions en ce qui concerne le support de fixation 1 et son réglage par rapport au boîtier, l'assemblage du boîtier et de son carter de protection, ainsi que le guide-chaîne 30 avec ses moyens de montage dans le boîtier, son ressort de tension 32, sa crémaillère 27 à fenêtres intermédiaires 27b et extrêmes 27c et son guidage à roulement 55 dans le boîtier.

Dans cette réalisation, on retrouve également le levier de transmission 15 auquel s'attache la tige de commande semirigide et qui entraîne à pivotement par un axe 14, une biellette de commande 56, cela, à l'encontre d'un ressort de torsion 19 dont les branches d'extrémité 19a passent de part et d'autre d'un doigt ou languette 56a solidaire de la biellette, et d'une saillie intérieure 9g du boîtier contre laquelle lesdites branches sont appliquées en tension.

Les cliquets d'entraînement de la crémaillère sont dans cette réalisation, montés de la manière suivante :

Un cliquet 57 d'entraînement de la crémaillère dans le sens suivant lequel le guide-chaîne va du plus petit au plus grand pignon de la roue libre, est articulé à une extrémité de la biellette 56, avec un ressort de torsion 58 enroulé sur son axe 59 et dont les branches sont reliées au cliquet, d'une part, et à un doigt axial 56b de la biellette, d'autre part.

L'autre cliquet 60 d'entraînement de la crémaillère dans l'autre sens, est articulé à l'une des extrémités d'un levier 61 lui-même articulé sur la biellette 56. Le levier 61 est sensiblement dans le plan du cliquet 57, de telle sorte que le deuxième cliquet 60 soit situé au-dessus du cliquet 57 qui peuvent ainsi être superposés partiellement, afin de gagner de la place en largeur. Les parties actives 57a, 60a formant bec d'entraînement unidirectionnel et rampe d'échappement, se font face l'une en-dessous de l'autre.

Comme pour le premier cliquet, un ressort de torsion 62 est enroulé sur un axe de pivotement 63 du cliquet 60, ses branches étant reliées au cliquet d'une part et à l'axe de pivotement 64 du levier 61 sur la biellette. Un autre ressort de torsion 65 est enroulé sur l'axe 64, ses extrémités étant en appui en tension contre le doigt 56b et contre le levier 61.

Le montage à articulation élastique des deux cliquets 57 - 60 et du levier 61, permet, comme on le voit bien aux figures 26, 27 et 28, de disposer les cliquets soit en position désaccouplée des ouvertures ou fenêtres de la crémaillère, lorsque la biellette 56 n'est pas actionnée (figure 26), soit avec l'un ou l'autre des cliquets en prise dans une fenêtre de la crémaillère, lorsque la biellette 56 est actionnée dans un sens ou dans l'autre (figures 27 et 28).

En position de repos, les deux cliquets écartés de la crémaillère s'appuient par leur face arrière en forme de came, contre des parois 9n, 9p du boîtier (figure 26), ce qui les oblige à basculer et les dégage des fenêtres de la crémaillère.

Lorsque la biellette 56 est actionnée dans le sens de la flèche f10, figure 27, la partie arrière du cliquet 57 s'éloigne de sa paroi d'appui 9n et le ressort de torsion 58 fait basculer le cliquet 57 dont la partie active 57a s'engage dans une des fenêtres 27c ou 27b de la crémaillère, en l'entraînant ainsi dans le sens de la flèche f11.

Si l'on relâche la manette de commande du changement de vitesse, la biellette 56 revient à la position neutre, sous l'action de son ressort de rappel 19, et le cliquet 57 reprend sa position initiale de la figure 26.

Lorsque la biellette 56 est actionnée dans le sens inverse, flèche f12, figure 28, le cliquet 57 bascule en arrière sur la rampe de la paroi 9n. Le cliquet 60, entraîné par le levier 61 qui est pivoté par le doigt axial 56b de la biellette, s'éloigne de la paroi 9p et bascule sous l'effet de son ressort de torsion 62 pour engager sa partie active 60a dans une des fenêtres 27b ou 27c de la crémaillère qui est ainsi entraînée selon flèche f13.

Comme précédemment, dans la position correspondant aux vitesses extrêmes, la disposition des fenêtres 27c qui ne se trouvent plus dans le chant de déplacement du cliquet correspondant, empêche ledit élément d'agir sur la crémaillère. De ce fait, toute détérioration du mécanisme est également évitée en cas d'impulsion superflue sur la manette.

Pour toutes les vitesses, on a prévu un verrouillage, afin d'éviter le désaccouplement de la crémaillère par rapport au boîtier ou le désalignement de sa fenêtre extrême inférieure par rapport au cliquet 57.

Pour cela et comme illustré aux figures 29 à 30, une bascule 68 est articulée en 66 dans un logement 10e du carter de protection. Une extrémité élargie 68a de la bascule s'adapte constamment sur le doigt axial 56b de la biellette 56, lorsque celle-ci est en position neutre. A cet effet, un ressort 67 ou moyen élastique équivalent, est interposé entre l'extrémité 68a de la bascule et le fond du logement 10e. Dans cette position, l'autre extrémité profilée 68b de la bascule est engagée dans l'une des entailles 27g réalisées sur le chant supérieur de la branche 27a de la crémaillère.

A noter qu'il y a autant d'entailles 27g que de fenêtres 27b et 27c, donc autant que de vitesses à passer.

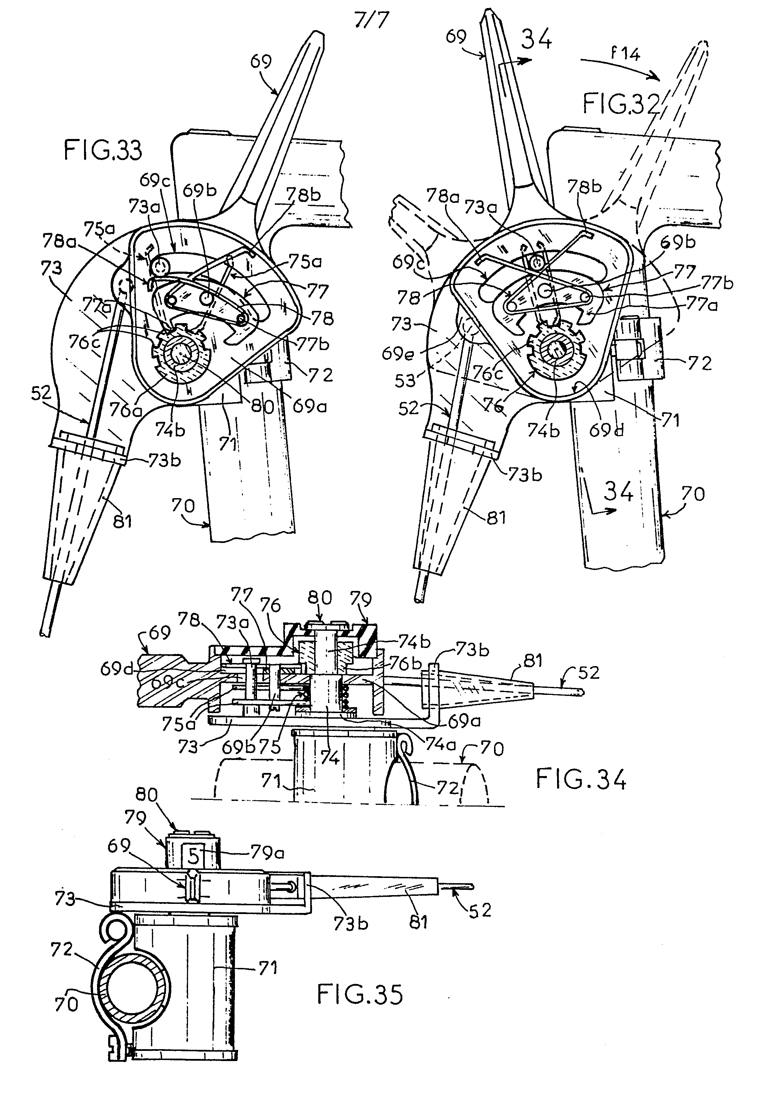

En se référant maintenant aux figures 32 à 35 des dessins, on décrit maintenant une autre forme de réalisation de l'organe de commande du changement de vitesse.

Dans cette réalisation, la manette de commande 69 est fixée à la potence 70 de la bicyclette, par tous moyens connus tels que collier en deux parties 71, 72, conçu éventuellement pour recevoir également la manette de commande du changement de vitesse avant.

Comme le dispositif précédent, le demi-collier 71 est agencé

- 21 -

0069687

pour recevoir et indexer un secteur 73 portant un axe 74 sur lequel tourillonne la manette 69. Un ressort de torsion 75 est enroulé autour de l'axe 74, entre la paroi 69a de la manette et un épaulement 74a de l'axe. Le ressort présente des branches 75a s'étendant de part et d'autre d'un pivot 69b solidaire de la paroi 69a de la manette, et de part et d'autre d'un doigt 73a relié au secteur 73 et traversant une ouverture en secteur 69c de la paroi de la manette.

Un tambour 76 est monté à rotation libre sur une portée 74b de l'axe 74, au-dessus de la paroi 69a. Ce tambour présente une portée cylindrique 76a sur laquelle sont inscrits de toute manière connue, des chiffres 1, 2, 3, 4, 5..., de repérage des vitesses, et une portée cylindrique 76b formée avec des dents 76c ou cannelures correspondant au nombre de vitesses à passer.

Sur le pivot 69b est monté à rotation libre un cliquet 77 de forme semblable à l'ouverture en secteur 69c et dont les extrémités saillantes constituent des crochets 77a destinés à s'engager entre les dents 76c du tambour, lors des déplacements de la manette 69.

Le cliquet 77 est maintenu en position neutre par un ressort en épingle 78 dont la partie médiane s'enroule sur des plots espacés 77b du cliquet, et dont les extrémités 78a - 78b qui se croisent, viennent s'appuyer en tension contre le doigt 73a.

Un carter de protection 79 s'emboîte sur la manette et autour du tambour 76 dont il laisse apparaître les chiffres de repérage des vitesses, par une fenêtre 79a, comme on le voit à la figure 35. Le carter et la manette sont maintenus ensemble par une vis axiale 80 coopérant avec l'axe de pivotement 74.

Sur un côté, la manette présente une chape 69e pour l'articulation de la goupille 53 de la tige semi-rigide de commande 52 qui passe ensuite, avec un large jeu, à travers un tunnel de guidage 81 clipsé sur une partie relevée 73b du secteur.

- 22 -

0069687

On comprend que lorsqu'on agit sur la manette 69, par exemple dans le sens indiqué par la flèche f14 de la figure 32, selon une amplitude complète, c'est-à-dire jusqu'à ce que le doigt 73a du secteur 73 bute dans le fond de l'ouverture 69c de la manette, le cliquet 77 bascule dans le sens illustré à la figure 33, du fait de l'augmentation de tension subie par la branche 78a du ressort en épingle, en appui contre le doigt 73a.

L'extrémité en crochet 77a du cliquet, située du côté de cette branche du ressort, s'engage alors entre deux dents 76c du tambour en l'entraînant en rotation.

Lorsqu'on relâche la manette qui revient automatiquement à la position neutre grâce au rappel du ressort 75, le cliquet reprend également une position neutre, sans entraîner le tambour.

Bien entendu, les deux réalisations du changement de vitesse et de la manette peuvent être combinées entre elles.

Enfin, il n'est pas exclu que le lien de commande entre la manette et le levier de transmission, soit un câble souple classique. Dans ce cas, si le déplacement angulaire de la manette dans le sens de traction du câble, ne pose pas de problème particulier, par contre, lorsque la manette revient à la position neutre et lorsqu'on agit en sens inverse sur la manette, il faut prévoir un ou des moyens élastiques de rappel et de traction du câble, sur la manette et sur le changement de vitesse.

Revendications.

1. Dispositif de commande assurant des positions multiples préétablies et contrôlées, applicable en particulier aux changements de vitesse pour les cycles et véhicules similaires, du type dans lesquels un ensemble guide-chaîne (30) porté à coulissement par un axe (29), est déplacé transversalement par rapport à un boîtier (9), ce dispositif comprenant des moyens (41 ou 69) de commande manuelle (ou autre éventuellement), déplacés angulairement, toujours avec la même amplitude, dans un sens ou dans l'autre, à partir d'une position neutre, jusqu'à une position limite, un ou des moyens (15) de transmission de commande pour relier les moyens de manoeuvre à un mécanisme à biellette (18 ou 56) ou équivalent, pivotée angulairement dans un sens ou dans l'autre, ladite biellette déplaçant alternativement des cliquets (23 ou 57, 60) ou organes similaires, qui coopèrent avec un organe (27) du type crémaillère portant des trous ou encoches (27b - 27c) ou autres points d'entraînement en nombre correspondant au nombre de positions préétablies à assurer, espacés d'une valeur correspondant à l'écartement entre chacun des pignons de la roue libre, ladite crémaillère étant montée parallèlement à l'axe (29) portant l'organe à positionner dont la crémaillère est solidaire, l'organe à positionner étant le guide - chaîne (30) dans l'application aux changements de vitesse pour cycles, est caractérisé en ce qu'un axe (14) est déplacé angulairement par l'intermédiaire du moyen de transmission (15) entraîné par les moyens de la commande manuelle (41 ou 69), ledit axe étant solidaire de la biellette dont un prolongement (18b ou 56a) reçoit la poussée d'un moyen élastique (19) mis en tension selon le sens de pivotement et qui tend toujours à ramener ladite biellette en position médiane correspondant à la position neutre des moyens de commande manuelle ou autre, ladite biellette coopérant avec un système de deux cliquets (23 ou 57, 60), au moins partiellement superposés, destinés à se trouver engagés successivement avec les trous ou encoches (27b - 27c) de l'organe crémaillère (27), les ouvertures ou encoches extrêmes (27c) de ladite crémaillère étant en partie obturées à des niveaux différents pour les deux encoches extrêmes, de façon que le cliquet corres-

40

pondant ne puisse entraîner la crémaillère au-delà des positions limites préétablies que doit prendre l'organe tel que le guide-chaîne (30) à positionner.

2. Dispositif selon 1, caractérisé en ce que le mécanisme d'entraînement de la crémaillère (27) et de l'organe à positionner tel que guide-chaîne (30), comprend deux cliquets (23) superposés, dont la partie active (23a) formant bec d'entraînement unidirectionnel et rampe d'échappement, sont inversement disposés pour chaque cliquet, lesdits cliquets étant montés coulissant sous la poussée de ressorts (24) pour être engagés ensemble ou séparément, dans une des ouvertures ou fenêtres (27b - 27c) de la crémaillère ; les cliquets et ressorts, et aussi de préférence une lame intercalaire (46) entre les cliquets, étant montés dans un porte-cliquets (22) guidé à coulissement parallèlement à la crémaillère (27), dans une ou des glissières (25) du boîtier (9) du dispositif, un masque (26) étant monté fixe dans le boîtier (9), entre la crémaillère (27) et les cliquets (23), l'ouverture (26a) en escalier de ce masque autorisant l'action d'entraînement de l'un ou l'autre cliquet dans les ouvertures ou fenêtres de la crémaillère ; le porte-cliquets (22) présentant directement ou d'une manière rapportée sous forme de plaquette (20), une chape (20a) ou analogue, destinée à coopérer avec l'extrémité (18c) de la biellette (18) solidaire de l'axe (14) qui est entraîné par le moyen de transmission (15) et la commande manuelle (41 ou 69).

3. Dispositif selon 1, caractérisé en ce que le mécanisme d'entraînement de la crémaillère (27) et de l'organe à positionner tel que le guide-chaîne (30), comprend deux cliquets (57, 60) partiellement superposés, dont les parties actives (57a, 60a) formant bec d'entraînement unidirectionnel et rampe d'échappement, se font face l'une en dessous de l'autre ; le cliquet (57) étant articulé en (59) à une extrémité de la biellette (56), tandis que le cliquet (60) est articulé en (63), en bout d'un levier (61) lui-même articulé élastiquement en (64) à une autre extrémité de la biellette ; le cliquet (57) est maintenu en position écartée au repos, par appui de sa face arrière contre une paroi (9n) du boîtier et bascule automatiquement pour engager son bec (57a) dans une des fenêtres (27b - 27c) de la crémaillère, sous l'effet d'un ressort de torsion (58) qui est enroulé sur son axe (59) et relié audit cliquet et à un doigt axial (56b) de la biellette, lorsque ladite biellette est actionnée pour éloigner le guide-chaîne du boîtier ; le cliquet (60) est maintenu en position écartée au repos, par appui de sa face arrière contre une paroi (9p) du boîtier, et bascule automatiquement pour engager son bec (60a) dans une des fenêtres (27b - 27c) de la crémaillère, sous l'effet d'un ressort de torsion (62) qui est enroulé sur son axe (63) et relié audit cliquet et à l'axe de pivotement (64) du levier (61) lorsque la biellette est actionnée pour rapprocher le guide-chaîne du boîtier ; dans cette dernière action, le cliquet (57) basculant en arrière sur une rampe de la paroi (9n) du boîtier.

4. Dispositif selon 1, caractérisé en ce que le moyen élastique de rappel en position neutre de la biellette (18 ou 56) est un ressort de torsion (19) enroulé autour de l'axe (14) solidaire de la biellette et du moyen de transmission (15) dont les brins ou branches d'extrémité passent de part et d'autre d'une languette (18b) ou d'un doigt (56a) de la biellette (18 ou 56) et s'appuient en tension de part et d'autre d'une saillie intérieure (9g) du boîtier ; la languette (18b) ou le doigt (56a) entraînant l'un des brins du ressort, lors du déplacement angulaire de la biellette, tandis que l'autre brin est retenu par la saillie (9g), en vue du retour automatique de la biellette en position médiane ou neutre.

5. Dispositif selon 1, caractérisé en ce que la crémaillère (27) qui porte les ouvertures ou fenêtres (27b - 27c) sur sa branche (27a), se prolonge par une branche (27d) perpendiculaire à la première et présente une ouverture (27e) à méplats ou similaires, pour l'indexation angulaire sur une portée correspondante (28a) formée sur un coussinet (28), destiné à coulisser sur l'axe (29) solidaire du boîtier (9) ; l'organe à positionner qui est un guide-chaîne (30) dans les changements de vitesse, étant monté à rotation libre par une entretoise (30e) portant le galet supérieur (30d) et les flasques (30a - 30b) sur un écrou-cheminée (31) vissé sur le coussinet et bloquant la branche (27d) de la crémaillère contre un épaulement dudit coussinet ; un ressort (32) qui agit en torsion, étant monté autour du coussinet, avec une branche d'extrémité (32a) engagée dans une des fentes (28d) du coussinet, et l'autre branche (32b) agissant contre un point d'appui (33) du guide-chaîne pour l'entraîner angulairement dans le sens de la tension de la chaîne.

6. Dispositif selon 1, caractérisé en ce que le boîtier (9) contenant le mécanisme d'entraînement de la crémaillère, la biellette et les cliquets, est recouvert par un carter de protection (10) qui s'emboîte de manière sensiblement étanche, sur le boîtier ; l'assemblage du boîtier et du carter s'opérant, du côté de l'axe (29) de montage du guide-chaîne (30), par une vis (12) ou moyen similaire, et du côté de l'axe (14) portant la biellette et le moyen de transmission, par une vis (8) vissée dans un bossage fileté (9a) du boîtier, après avoir traversé le carter et un support (1) de liaison de l'ensemble boîtier-carter avec l'axe (4) du moyeu arrière (5) de la bicyclette, dans le cas d'un changement de vitesse.

7. Dispositif selon 6, caractérisé en ce que le support (1) est réglable transversalement par rapport à l'ensemble boîtier-carter, en vue de l'alignement préalable de l'organe à positionner (guide-chaîne 30), avec la première position (le plus petit pignon de la roue libre), le réglage s'opérant après déblocage du support (1) par la vis (8) et action sur une vis (11) montée à rotation libre, sans déplacement axial, sur une partie inférieure (1c) du support passant devant le boîtier (9), et se vissant dans un trou fileté (9c) du boîtier ; le coulissement transversal du support (1) par rapport à l'ensemble boîtier-carter, étant autorisé du fait que ledit support (1) présente une ouverture oblongue (1d) pour le passage de la vis (8) ; ledit support étant guidé dans son déplacement, par au moins une rainure inférieure (1e) coopérant avec une glissière (10b) exécutée sur le carter (10).

8. Dispositif selon 6, caractérisé en ce que le support (1) porte à articulation libre, en (2), à sa partie supérieure, une patte (3) de fixation à l'axe (4) du moyeu arrière (5) de la bicyclette, la partie inférieure en décrochement (3b) de la patte, pouvant s'appuyer contre une butée réglable (7) formée sur le support, afin de limiter vers l'avant, le basculement en tension du changement de vitesse.

9. Dispositif selon 1, caractérisé en ce que la branche (27a) de la crémaillère portant les ouvertures ou fenêtres (27b - 27c) d'entraînement par les cliquets, s'appuie par son chant inférieur, sur un galet (55) ou organe similaire, monté à rotation libre dans un évidement du boîtier, afin de faciliter les déplacements de la crémaillère.

10. Dispositif selon 2 et 9, caractérisé en ce que le masque (26) est maintenu fixement dans le boîtier, entre les cliquets (23) et la crémaillère (27), d'une part latéralement par appui de ses extrémités repliées contre des parois (9h - 9i) du boîtier, et d'autre part, en hauteur, par le carter (10) présentant à ce niveau, une face de butée ; le chant inférieur du masque (26) étant découpé en (26c) pour le passage du galet de roulement (55).

11. Dispositif selon 1 et 2, caractérisé en ce que la crémaillère (27) présente sur le chant supérieur de sa branche (27a), une saillie (27f) destinée à venir en appui contre une butée de sécurité (10d) du carter (10), lorsque la crémaillère est en fin de course dans le sens où le guide-chaîne (30) est le plus éloigné du boîtier (9).

12. Dispositif selon 1 et 3, caractérisé en ce que chaque position de la crémaillère (27) obtenue par l'action des cliquets (57 ou 60), est assurée par une bascule (68) montée à rotation libre en (66), dans un logement (10e) du carter (10), avec une extrémité élargie (68a) s'appuyant sur le doigt axial (56b) de la biellette (56), lorsque celle-ci est en position neutre, sous l'effet d'un organe élastique (67) en appui dans le logement (10e), l'autre extrémité profilée (68b) de la bascule étant alors engagée dans l'une des entailles (27g) réalisées sur le chant supérieur de la branche (27a) de la crémaillère, en nombre correspondant au nombre de positions à assurer.

13. Dispositif selon 1, dont le moyen de commande manuelle appliqué au changement de vitesses de bicyclettes est du type comprenant une manette (41) montée à oscillation sur un axe-pivot (39) qui est porté par un secteur (38) indexé sur un demi-collier (37) ou porte-manette, ladite manette pouvant être déplacée angulairement, toujours avec la même amplitude, dans un sens ou dans l'autre, à partir d'une position neutre jusqu'à une position limite, à l'encontre d'un ressort de torsion (43) rappelant automatiquement la manette en position neutre, un repérage des positions obtenues du guide-chaîne ou autre étant exécuté sur un tambour (49) entraîné en rotation seulement pendant le déplacement de la manette, de la position neutre à l'une des positions limites, par un ou des dispositifs à cliquet (45) et dentures orientées (49c) du tambour, caractérisé en ce que le moyen de commande manuelle est fixé au guidon ou cintre (34) de la bicyclette, en un point aisément accessible par la main de l'utilisateur tenant le guidon, avec la manette (41) inclinée vers le haut du fait de son montage sur un demi-collier supérieur (37) à face supérieure inclinée, de manière à orienter le lien de commande (52) en direction du tube incliné du cadre ; le ressort (43) de rappel de la manette en position neutre, le tambour (49), le cliquet (45) d'entraînement en rotation du tambour et son masque (47) d'échappement des parties actives (45b) du cliquet, étant entièrement logés dans la manette et isolés de l'extérieur par un carter de protection (50) clipsé sur une partie relevée (38c) du secteur (38) et assemblé par une vis axiale (51) se vissant dans l'axe-pivot (39) ; ledit carter laissant apparaître les signes de repérage par une fenêtre (50d).

14. Dispositif selon 1, dont le moyen de commande manuelle appliqué au changement de vitesse de bicyclettes est du type comprenant une manette (69) montée à oscillation sur un axe-pivot (74) qui est porté par un secteur (73) indexé sur un demi-collier (71) ou porte-manette, ladite manette pouvant être déplacée angulairement toujours avec la même amplitude, dans un sens ou dans l'autre à partir d'une position neutre jusqu'à une position limite, à l'encontre d'un ressort de torsion (75) rappelant automatiquement la manette en position neutre, un repérage des positions obtenues du guide - chaîne ou autre étant exécuté sur un tambour (76) entraîné en rotation seulement pendant le déplacement de la manette de la position neutre à l'une des positions limites, par un ou des dispositifs à cliquet (77) coopérant avec des dents (76c) du tambour, caractérisé en ce que le moyen de commande manuelle, fixé sur la potence (70)de la bicyclette, présente une manette (69) dont la paroi centrale (69a) tourillonne sur l'axe-pivot (74) et porte un cliquet (77) en forme de secteur, qui est articulé en son centre, sur un pivot (69b) solidaire de ladite paroi, les extrémités du cliquet forment des crochets (77a) destinés à s'engager alternativement entre les dents (76c) du tambour (76), lorsque la manette est entraînée dans un sens ou dans l'autre, sous l'effet d'un ressort en épingle (78) dont la partie médiane s'enroule sur des plots espacés (77b) du cliquet, et dont les extrémités (78a - 78b) qui se croisent, s'appuient en tension contre un doigt (73a) solidaire du secteur (73) et qui traverse une ouverture en secteur (69c) de la paroi (69a) de la manette autorisant les déplacements limités de ladite manette.

15. Dispositif selon 14, caractérisé en ce que le tambour (76), le cliquet (77) et les ressorts (75 et 78) sont enfermés dans le corps de la manette qui est recouvert par emboîtement d'un carter de protection (79) laissant apparaître les signes de repérage du tambour, par une fenêtre (79a).

16. Dispositif selon 13 et 14, caractérisé en ce que le lien de commande (52) présente à une extrémité, une goupille (53) qui est logée à rotation libre dans un chambrage (41f) ou une chape (69e) exécutée latéralement sur la manette (41 ou 69) ; le lien de commande (52) passant ensuite par la partie relevée (38c ou 73b) du secteur (38 ou 73) qui présente à cet effet, un moyen de guidage (38d ou 81).

17. Dispositif selon 1 et 16, caractérisé en ce que le lien

0069687

de commande reliant le moyen de commande manuelle (41 ou 69) au moyen de transmission (15), est une tige métallique genre "corde à piano", semi-rigide (52), recouverte d'une gaine incompressible et inextensible retenue au niveau de la partie relevée (38c ou 73b) du secteur (38 ou 73) et sur une butée de gaine (9m) du boîtier (9).

FIG.1

FIG.24

FIG.25

FIG.6

0069687

FIG. 2

FIG. 5

FIG.3

FIG.4

FIG.7

FIG.8

FIG.9

FIG.10

FIG.11

FIG.12

FIG.13

FIG.14

FIG.15

FIG.16

FIG.17

FIG.18

0069687

4/7

0069687

5/7

FIG.19

FIG.20

FIG.21

FIG.22

FIG.23

FIG.26

9m
19a
29
9g
56a
15
14
9
62
56
61
58
31
9n
31
9p
30a
60
59 57
27a
63
28
29
32
29
27

FIG.27

9m
19a
9g
56a
15
14
f 10
9
56b
65 56
64
63
59
57
60
f 11
30
27b
57a
27c
29
28
32
27

FIG.28

9m
9g
19a
15
56a
f 12
14
58
56
59
56b
57
64
61
9n
60
f 13
27c 27b 60
30
10
28
32
9
29

FIG.30

12
68
10
27g
9n
27c
27c
9
27b
55
27

12
66
68
10
9n
9p
60
61
57
56 56b
FIG.31

FIG.29

9j
67
68
30
68b
56a
68a
66
19a
27g
9g
60
27
62
61 58
29
32
19
56
10
14
56b
55
9
30
15
28

0069687

FIG.33

FIG.32

f 14

FIG.34

FIG.35

Office européen
des brevets

**RAPPORT DE RECHERCHE EUROPEENNE**

EP   82 42 0089

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl. ³) |
|---|---|---|---|
| | --- | | B 62 M   9/12 |
| A | EP-A-0 013 647   (ANVAR) <br><br> * en entier * | 1,3,5, 9,13 | |
| A | FR-A-1 025 012   (MOREL) <br> * figure 3;  colonne de gauche, page 1, lignes 1-10 * | 1 | |
| A | FR-A-1 010 173   (RUMBLE) <br> * figure 3;  page 2, colonne de gauche, lignes 37-57 * | 2 | |
| A | FR-A-2 349 489   (SHIMANO) <br> * en entier * | 1 | |
| A | FR-A-2 342 887   (JUY) <br> * en entier * | 1 | DOMAINES TECHNIQUES RECHERCHES (Int. Cl. ³) |
| A | FR-A-2 337 657   (SHIMANO) <br> * en entier * | 1 | B 62 M <br> B 62 K |
| A | FR-A-2 395 880   (SHIMANO) <br><br> * en entier * | | |
| | ----- | | |

Le présent rapport de recherche a été établi pour toutes les revendications

| Lieu de la recherche <br> LA HAYE | Date d'achèvement de la recherche <br> 11-10-1982 | Examinateur <br> GEMMELL R.I.D. |
|---|---|---|